# EUROPEAN PATENT SPECIFICATION

(11) **EP 3 885 412 B1**
(45) Date of publication and mention of the grant of the patent: **23.08.2023**
(21) Application number: 21162258.4
(22) Date of filing: 12.03.2021
(51) Int. Cl.: C09D 11/00, C09D 11/101

(54) **INKJET ACTIVE-ENERGY-RAY-CURABLE COMPOSITION, THREE-DIMENSIONAL OBJECT PRODUCING METHOD, AND THREE-DIMENSIONAL OBJECT PRODUCING APPARATUS**
DURCH AKTIVE ENERGIESTRAHLEN HÄRTBARE TINTENSTRAHLZUSAMMENSETZUNG, VERFAHREN ZUR HERSTELLUNG DREIDIMENSIONALER OBJEKTE UND VORRICHTUNG ZUR HERSTELLUNG DREIDIMENSIONALER OBJEKTE
COMPOSITION DURCISSABLE PAR RAYONNEMENT D'ÉNERGIE ACTIVE, PROCÉDÉ DE FABRICATION D'OBJET TRIDIMENSIONNEL ET APPAREIL DE PRODUCTION D'OBJET TRIDIMENSIONNEL

(30) Priority: 23.03.2020 JP 2020051682
(43) Date of publication of application: 29.09.2021
(73) Proprietor: Ricoh Company, Ltd., Tokyo 143-8555 (JP)
(72) Inventor: OKADA, Noriaki, Tokyo, 143-8555 (JP); NAITO, Hiroyuki, Tokyo, 143-8555 (JP); SHIBA, Keisuke, Tokyo, 143-8555 (JP)
(74) Representative: Marks & Clerk LLP

(56) References cited:
- EP-A1- 3 561 008
- WO-A1-2019/029641
- WO-A1-2019/189157
- WO-A1-2020/136654
- JP-A- 2016 047 895

## Description

### BACKGROUND OF THE INVENTION

### Field of the Invention

The present disclosure relates to an inkjet active-energy-ray-curable composition, a three-dimensional object producing method, and a three-dimensional object producing apparatus.

### Description of the Related Art

Techniques called additive manufacturing (AM) are known as techniques for producing three-dimensional objects. The techniques calculate shapes of cross-sections thinly sliced with respect to a layer lamination direction and form layers in accordance with the calculated shapes, to produce three-dimensional objects.

In recent years, a material jetting method of locating an active-energy-ray-curable composition at needed positions using an inkjet head and curing the located active-energy-ray-curable composition using, for example, a light irradiator, to produce a three-dimensional object has been paid attention among the additive manufacturing techniques.

The material jetting method is mainly used for trial production, and cured products need to have various properties such as strength, ductility, shock resistance, and heat resistance. As a method for improving these properties, a method of adding a solid component in the active-energy-ray-curable composition is known.

For example, a proposed method produces a three-dimensional object using a photo-curable resin composition for stereolithography containing a hard solid component (for example, see Japanese Patent No. 4307636). According to this disclosure, when a hard solid component is contained, effects such as improvement of heat resistance, improvement of mechanical properties such as reduction of thermal deformability and improvement of mechanical strength, and improvement of dimensional accuracy can be obtained.

For example, a proposed active-energy-ray-curable composition in which inorganic particles are combined with a radical-polymerizable monofunctional monomer can produce a cured product that satisfies both of extensibility and a sufficient hardness (for example, see Unexamined Japanese Patent Application No. 2017-160405). Reference is also made to WO 2019/189157, JP 2016-047895, EP 3561008, WO 2019/029641 and WO 2020/136654.

### SUMMARY OF THE INVENTION

According to an aspect of the present disclosure, an inkjet active-energy-ray-curable composition contains a hard solid component and a radical-polymerizable monomer. A difference (a HSP value (B) - a HSP value (A)) between the HSP value (A) of a substance that constitutes a surface of the hard solid component and the HSP value (B) of a liquid component of the inkjet active-energy-ray-curable composition is 0.5 (cal/cm³)^{0.5} or greater but 3.0 (cal/cm³)^{0.5} or less. The hard solid component is silica of which surface is reformed with a silane coupling agent, and the radical-polymerizable monomer comprises an acrylic-based monomer or a methacrylic-based monomer.

### BRIEF DESCRIPTION OF THE DRAWINGS

FIG. 1 is a schematic view illustrating an example of an object producing apparatus according to an embodiment of the present disclosure; and
FIG. 2 is a view illustrating an example of a method for producing sample for measurement of elastic modulus and tensile strength in Examples.

### DESCRIPTION OF THE EMBODIMENTS

### (Inkjet active-energy-ray-curable composition)

An inkjet active-energy-ray-curable composition of the present disclosure contains a hard solid component and a radical-polymerizable monomer. A difference (a HSP value (B) - a HSP value (A)) between the HSP value (A) of a substance that constitutes a surface of the hard solid component and the HSP value (B) of a liquid component of the inkjet active-energy-ray-curable composition is 0.5 (cal/cm³)^{0.5} or greater but 3.0 (cal/cm³)^{0.5} or less. The inkjet active -energy-ray-curable composition may further contain a polymerization initiator, a surfactant, a polymerization inhibitor, a colorant, a dispersant, and other components.

The "inkjet active-energy-ray-curable composition" is a composition that is discharged by an inkjet method and cures and forms a cured product when irradiated with active energy rays.

In the present disclosure, "curing" means "a polymer being formed", but is not limited to solidifying but also encompasses thickening, and simultaneous solidifying and thickening.

A "solidified product (cured product)" means a polymer, but is not limited to a solid but also encompasses a thickened product and a mixture of a solid and a thickened product.

The present inventors have studied the following problems of existing techniques and obtained the following findings.

Existing techniques relating to an active-energy-ray-curable composition containing a hard solid component may have a problem that the composition thickens and is difficult to discharge by an inkjet method.

The present inventors have found that when a difference (a HSP value (B) - a HSP value (A)) between the HSP value (A) of a substance that constitutes the surface of a hard solid component and the HSP value (B) of a liquid component of an active-energy-ray-curable composition is within a predetermined range, the active-energy-ray-curable composition is suppressed from thickening even when the composition contains the hard solid component and can be discharged suitably by an inkjet method, and a cured product to be formed has a high elastic modulus, a high tensile strength, and a high shock resistance.

The present disclosure has an object to provide an inkjet active-energy-ray-curable composition that can be discharged by an inkjet method and can produce a cured product excellent in strength and shock resistance.

The present disclosure can provide an inkjet active-energy-ray-curable composition that can be discharged by an inkjet method and can produce a cured product excellent in strength and shock resistance.

### <Hard solid component>

The hard solid component can improve, for example, elastic modulus, strength, and shock resistance of a cured product of the inkjet active-energy-ray-curable composition.

"Hard" means a property that a shape hardly deforms due to an external stress.

A person ordinarily skilled in the art can judge whether a component is hard or not according to judgment criteria known in the art. Examples of such judgment criteria include Vickers hardness and elastic modulus.

In a preferred embodiment, the elastic modulus of the hard solid component is 4 GPa or greater and more preferably 5 GPa or greater.

The elastic modulus can be measured according to, for example, JIS K 7161, JIS K 7171, and ISO 14577.

The hard solid component is silica of which surface is reformed with a silane coupling agent.

A "solid component" means a component that can maintain a solid state in the inkjet active-energy-ray-curable composition.

It is preferable that the solid component have a form of particles in the inkjet active-energy-ray-curable composition in a normal-temperature, normal-pressure environment.

Moreover, it is preferable that the solid component be dispersed in the inkjet active-energy-ray-curable composition.

The content of the hard solid component is preferably 0.5% by volume or greater but 40.0% by volume or less and more preferably 1.0% by volume or greater but 20.0% by volume or less relative to the volume of the total amount of the composition. When the content of the hard solid component is 0.5% or greater relative to the volume of the total amount of the composition, the properties of the hard solid component can be better reflected in an object. When the content of the hard solid component is 1.0% or greater, the properties of a solid component can be reflected in an object even better. When the content of the hard solid component is 40.0% or less relative to the volume of the total amount of the composition, the binding force of the matrix resin can be suppressed from degradation, and a cured product can be suppressed from being brittle as a result. When the content of the hard solid component is 20.0% or less relative to the volume of the total amount of the composition, a cured product can be better suppressed from being brittle.

Moreover, because the inkjet active-energy-ray-curable composition has a low viscosity in this content range of the hard solid component, dischargeability of the inkjet active-energy-ray-curable composition by an inkjet method can be improved.

When the content of a solid component in the inkjet active-energy-ray-curable composition is constant, the elastic modulus of a cured product is better improved as the elastic modulus of the solid component used is higher. In other words, use of a solid component having a high elastic modulus makes it possible to use the solid component in a smaller addition amount and obtain a cured product having an intended elastic modulus. It is generally preferable that a composition used for being discharged by an inkjet method have a low viscosity, whereas it is known that the viscosity of the composition rises as the content of a solid component is increased. Hence, for an inkjet purpose as in the present disclosure, it is preferable to use a solid component having a high elastic modulus to improve elastic modulus, while suppressing the content of the solid component.

The shape of the hard solid component is not particularly limited, and may be spherical, rod-like, or irregular, or the hard solid component may be hollow particles, porous particles, or particles having a core-shell structure.

The volume average particle diameter of the hard solid component is preferably 5 nm or greater but 1,000 nm or less and more preferably 120 nm or greater but 300 nm or less.

When the volume average particle diameter of the hard solid component is 5 nm or greater, the properties of the hard solid component can be reflected in an object. When the volume average particle diameter of the hard solid component is 120 nm or greater, shock absorption by exfoliation between the hard solid component and the matrix resin at the interface can be expected. That is, when the volume average particle diameter of the hard solid component is 120 nm or greater, an applied shock energy is partially consumed by interface exfoliation, making cracking less likely to occur.

The matrix resin means a cured resin other than and surrounding the hard solid component in a cured product of the composition.

When the volume average particle diameter of the hard solid component is 1,000 nm or less, discharging stability by an inkjet method can be improved. When dispersion stability of a solid component in the inkjet active-energy-ray-curable composition is taken into consideration, the volume average particle diameter of the hard solid component is preferably 300 nm or less.

When shock resistance of a cured product is taken into consideration, a broad particle size distribution is preferable, and the abundance ratio of a solid component having a particle diameter that is 0.7 times or less or 1.4 times or more the volume average particle diameter of the hard solid component is preferably 10% or greater and more preferably 20% or greater.

It is inferred that the amount of shock absorption by exfoliation between the hard solid component and the matrix resin is greater when the particle size distribution is broader, although a detailed reason is unknown.

The volume average particle diameter and the particle size distribution can be measured with, for example, a particle size analyzer (MICROTRAC MODEL UPA9340, available from Nikkiso Co., Ltd.).

### -Surface reformation-

The surface of silica that have, for example, a hydroxyl group over the surface thereof among the hard solid components, are reformed using a silane coupling agent.

The silane coupling agent is not particularly limited and examples of the silane coupling agent include vinylmethoxysilane, vinylethoxysilane, 2-(3,4-epoxycyclohexyl)ethyl trimethoxysilane, 3-glycidoxypropyl methyl dimethoxysilane, 3-glycidoxypropyl trimethoxysilane, 3-glycidoxypropyl methyl diethoxysilane, 3-glycidoxypropyl triethoxysilane, styryl p-styryl trimethoxysilane, 3-methacryloxypropyl methyl dimethoxysilane, 3-methacryloxypropyl trimethoxysilane, 3-methacryloxypropyl methyl diethoxysilane, 3-methacryloxylpropyl triethoxysilane, 3-acryloxypropyl trimethoxysilane, N-2-(aminoethyl)-3-aminopropyl methyl dimethoxysilane, N-2-(aminoethyl)-3-aminopropylmethyl dimethoxysilane, 3-aminopropyl trimethoxysilane, 3-aminopropyl triethoxysilane, 3-triethoxysilyl-N-(1,3-dimethyl-butylidene)propylamine, N-phenyl-3-aminopropyl trimethoxysilane, hydrochloride of N-(vinylbenzyl)-2-aminoethyl-3-aminopropyl trimethoxysilane, tris-(trimethoxysilylpropyl)isocyanurate, 3-ureidepropyl trialkoxysilane, 3-mercaptopropyl methyl dimethoxysilane, 3-mercaptopropyl trimethoxysilane, 3-isocyanate propyl triethoxysilane, and 3-trimethoxysilylpropyl succinic anhydride. One of these silane coupling agents may be used alone or two or more of these silane coupling agents may be used in combination.

Among these silane coupling agents, silane coupling agents containing an unsaturated double bond, such as vinylmethoxysilane, 3-methacryloxypropyl methyl dimethoxysilane, and 3-acryloxypropyl trimethoxysilane are particularly preferable.

### <Liquid component>

The liquid component of the composition contains a radical-polymerizable compound, and further contains other components as needed.

In the present disclosure, a liquid component means a component that is liquid in a normal-temperature, normal-pressure environment.

### «Radical-polymerizable compound»

A "radical-polymerizable compound" means a compound that can form a polymer through radical polymerization, and is typically a compound in a monomer unit containing one or more radical-polymerizable functional groups. Examples of the radical-polymerizable compound include radical-polymerizable monomers such as radical-polymerizable monofunctional monomers and radical-polymerizable multifunctional monomers, and radical-polymerizable oligomers. One of these radical-polymerizable compounds may be used alone or two or more of these radical-polymerizable compounds may be used in combination.

All of radical-polymerizable monofunctional monomers, radical-polymerizable multifunctional monomers, and radical-polymerizable oligomers are monomer units of cured products obtained through radical polymerization by active energy rays. That is, in the present disclosure, a "radical-polymerizable monomer" represents a monomer molecule containing one or more radical-polymerizable functional groups, and a "radical-polymerizable oligomer" represents an oligomer molecule containing one or more radical-polymerizable functional groups. An "oligomer" represents a molecule having a small number of structural units derived from monomers, and the number of the structural units is typically preferably 2 or greater but 20 or less although it depends on the structure of the monomer and the applications of the oligomer.

The inkjet active-energy-ray-curable composition of the present disclosure can be suitably used in an inkjet method because when a radical-polymerizable compound is used as a polymerizable compound, thickening is suppressed and the polymerization speed can be improved compared with when a cationically polymerizable compound is used as a polymerizable compound.

Moreover, use of a radical-polymerizable monomer as a radical-polymerizable compound makes it possible to better suppress thickening of the inkjet active-energy-ray-curable composition.

Use of a radical-polymerizable monofunctional monomer as a radical-polymerizable compound makes it possible to even better suppress thickening of the inkjet active-energy-ray-curable composition.

Use of a radical-polymerizable oligomer as a radical-polymerizable compound makes it possible to reduce cure shrinkage of a cured product and improve extensibility and toughness of a cured product.

Examples of the radical-polymerizable monofunctional monomer include acrylamide, N,N-dimethyl acrylamide, N-isopropyl acrylamide, acryloylmorpholine, hydroxyethyl acrylamide, isobornyl (meth)acrylate, 2-ethylhexyl (meth)acrylate, 2-hydroxyethyl (meth)acrylate, 2-hydroxypropyl (meth)acrylate, caprolactone-modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonylphenol (meth)acrylate. One of these radical-polymerizable monofunctional monomers may be used alone or two or more of these radical-polymerizable monofunctional monomers may be used in combination.

Example of the radical-polymerizable multifunctional monomer include monomers such as bifunctional monomers and trifunctional or higher monomers. One of these radical-polymerizable multifunctional monomers may be used alone or two or more of these radical-polymerizable multifunctional monomers may be used in combination.

Examples of the bifunctional radical-polymerizable multifunctional monomer include dipropylene glycol di(meth)acrylate, diethylene glycol di(meth)acrylate, tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, tricyclodecane dimethanol di(meth)acrylate, caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate. One of these bifunctional radical-polymerizable multifunctional monomers may be used alone or two or more of these bifunctional radical-polymerizable multifunctional monomers may be used in combination.

Examples of the trifunctional or higher radical-polymerizable multifunctional monomer include trimethylolpropane tri(meth)acrylate, pentaerythritol tri(meth)acrylate, dipentaerythritol hexa(meth)acrylate, triallyl isocyanurate, ε-caprolactone-modified dipentaerythritol tri(meth)acrylate, ε-caprolactone-modified dipentaerythritol tetra(meth)acrylate, (meth)acrylate, ε-caprolactone-modified dipentaerythritol penta(meth)acrylate, ε-caprolactone-modified dipentaerythritol hexa(meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxypenta(meth)acrylate, ethoxylated pentaerythritol tetra(meth)acrylate, and penta(meth)acrylate ester. One of these trifunctional or higher radical-polymerizable multifunctional monomers may be used alone or two or more of these trifunctional or higher radical-polymerizable multifunctional monomers may be used in combination.

The radical-polymerizable oligomer is preferably, for example, a monofunctional or higher but hexafunctional or lower monomer, and more preferably a bifunctional or higher but trifunctional or lower monomer. One of these radical-polymerizable oligomers may be used alone or two or more of these radical-polymerizable oligomers may be used in combination.

When a radical-polymerizable oligomer containing a urethane group is used, side chains of a polymer interact with each other and improve toughness of a cured product. A urethane acrylate oligomer is preferable as the radical-polymerizable oligomer containing a urethane group.

A commercially available product can be used as the radical-polymerizable oligomer. Examples of the commercially available product include UV-6630B (a UVcurable urethane acrylate oligomer, with a molecular weight of 3,000 and two polymerizable functional groups, available from Nippon Synthetic Chemical Industry Co., Ltd.), and CN983NS (an aliphatic urethane acrylate oligomer with two polymerizable functional groups, available from Sartomer Company Inc.). One of these commercially available products may be used alone or two or more of these commercially available products may be used in combination.

The radical-polymerizable compound comprises acrylic-based monomers or methacrylic-based monomers. An acrylic-based monomer is preferable. An acrylic-based monomer can be used suitably in an inkjet method because an acrylic-based monomer can suppress thickening of the inkjet active -energy-ray-curable composition and improve the polymerization speed.

When using a radical-polymerizable monofunctional monomer other than an acrylic-based monomer or an epoxy-based monomer, it is preferable to use an acrylic-based monomer in combination. Examples of the epoxy-based monomer include bis(3,4 epoxycyclohexyl), and bisphenol A diglycidyl ether. When using an epoxy-based monomer and an acrylic-based monomer in combination, it is preferable to further use an oxetane monomer in combination.

The content of the radical-polymerizable compound is preferably 50.0% by mass or greater, more preferably 60.0% by mass or greater, yet more preferably 70.0% by mass or greater, and particularly preferably 80.0% by mass or greater relative to the total amount of the composition. The content of the radical-polymerizable compound is preferably 99.0% by mass or less and more preferably 95.0% by mass or less.

The content of the radical-polymerizable monomer is preferably 50.0% by mass or greater and more preferably 60.0% by mass or greater relative to the total amount of the composition. The content of the radical-polymerizable monomer is preferably 95.0% by mass or less and more preferably 85.0% by mass or less.

The content of the radical-polymerizable monofunctional monomer is preferably 30.0% by mass or greater and more preferably 40.0% by mass or greater relative to the total amount of the composition. The content of the radical-polymerizable monofunctional monomer is preferably 99.0% by mass or less and more preferably 95.0% by mass or less.

The content of the radical-polymerizable multifunctional monomer is preferably 10.0% by mass or greater relative to the total amount of the composition. The content of the radical-polymerizable multifunctional monomer is preferably 40.0% by mass or less and more preferably 30.0% by mass or less.

The content of the radical-polymerizable oligomer is preferably 1.0% by mass or greater and more preferably 10.0% by mass or greater relative to the total amount of the composition. The content of the radical-polymerizable oligomer is preferably 40.0% by mass or less and more preferably 30.0% by mass or less.

### [Affinity (HSP value) between a substance constituting the surface of the hard solid component and the liquid component of the composition]

It is preferable that the affinity between the substance that constitutes the surface of the hard solid component and the liquid component of the composition be high. A high affinity between the substance that constitutes the surface of the hard solid component and the liquid component of the composition improves dispersion stability of the hard solid component in the inkjet active -energy-ray-curable composition and improves discharge ability by an inkjet method and storage stability. A high affinity also improves adhesiveness at the interface between the hard solid component and the resin in a cured product.

The "substance that constitutes the surface of the hard solid component" means at least one of a compositional moiety (including a residue) inherent in the hard solid component, and a substance different from the compositional moiety (including a residue) inherent in the hard solid component (the substance including the compositional moiety).

The "liquid component of the composition" means a liquid component other than solid component contained in the composition.

A HSP value (Hansen solubility parameter) is one evaluative means indicating the affinity between the substance that constitutes the surface of the hard solid component and the liquid component of the composition.

A HSP value is an effective means for predicting compatibility between two kinds of substances and a parameter discovered by Charles M. Hansen.

A HSP value includes the following three parameters (δD, δP, and δH) derived experimentally and logically, and is expressed as "(HSP value)²=(δD)²+(δP)²+(δH)²". In the present disclosure, the unit of a HSP value is (cal/cm³)^{0.5}.
δD: Energy attributable to London dispersion force
δP: Energy attributable to dipolar interaction
δH: Energy attributable to hydrogen bonding strength

The HSP value is a vector quantity expressed as (δD, δP, δH), and plotted and expressed in a three-dimensional space (Hansen space) in which coordinate axes represent the three parameters.

Substances commonly used have known information sources such as databases for the HSP values thereof. Therefore, it is possible to obtain the HSP value of a desired substance by, for example, consulting a database. The HSP value of a substance whose HSP value is not registered in any database can be calculated based on the chemical structure of the substance, using computer software such as Hansen Solubility Parameters in Practice (HSPIP).

It is also possible to calculate a HSP value by a Hansen solubility sphere method. The HSP value of a mixture containing two or more kinds of substances is calculated based on the vectorial sum of the products between the HSP values of the substances and the volume ratios of the substances with respect to the whole mixture.

Examples of the method for identifying the substance that constitutes the surface of the hard solid component include methods using, for example, X-ray photoelectron spectroscopy (XPS), Auger electron spectroscopy (AES), secondary ion mass spectrometry (SIMS), electron probe microanalysis (EPMA), and X-ray microanalysis (XMA).

Examples of the method for identifying the liquid component of the composition include methods of separating components by, for example, silica gel chromatography, gel permeation chromatography (GPC), and high performance liquid chromatography (HPLC), and analyzing each component by mass spectrometry, infrared spectroscopy, nuclear magnetic resonance spectroscopy, and ultraviolet spectroscopy.

Examples of the method for measuring the content (volume ratio) of the liquid component in the composition include a quantifying method based on comparison with a calibration curve using, for example, gas chromatography (GC), liquid chromatography (LC), and ion chromatography (IC).

In the present disclosure, a HSP value (B) is greater than a HSP value (A), where the HSP value (A) is the HSP value of the substance that constitutes the surface of the hard solid component, and the HSP value (B) is the HSP value of the liquid component of the composition. The difference (HSP value (B) - HSP value (A)) between the HSP value (A) and the HSP value (B) is 0.5 (cal/cm³)^{0.5} or greater but 3.0 (cal/cm³)^{0.5} or less, and preferably 0.5 (cal/cm³)^{0.5} or greater but 2.0 (cal/cm³)^{0.5} or less.

When the difference (HSP value (B) - HSP value (A)) between the HSP value (A) and the HSP value (B) is less than 0.5 (cal/cm³)^{0.5}, (a value indicating viscosity rise/an addition amount of the solid component) is high. When the difference (HSP value (B) - HSP value (A)) between the HSP value (A) and the HSP value (B) is greater than 3.0 (cal/cm³)^{0.5}, dispersibility of the solid component is poor.

### <Polymerization initiator>

As the polymerization initiator, an arbitrary substance that produces radicals when irradiated with light (particularly, ultraviolet rays having a wavelength of from 220 nm through 400 nm) can be used. One such substance may be used alone or two or more such substances may be used in combination. The content of the polymerization initiator is preferably 0.1% by mass or greater but 10.0% by mass or less and more preferably 1.0% by mass or greater but 5.0% by mass or less relative to the mass of the inkjet active-energy-ray-curable composition.

Examples of the polymerization initiator include acetophenone, 2, 2-diethoxyacetophenone, p-dimethylaminoacetophenone, benzophenone, 2-chlorbenzophenone, p,p'-chlorobenzophenone, p,p-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methyl propan-1-one, methyl benzoyl formate, 1-hydroxycyclohexylphenyl ketone, azobis isobutylnitrile, benzoyl peroxide, and di-tert-butyl peroxide.

### <Surfactant>

The surfactant is preferably, for example, a compound having a molecular weight of 200 or greater but 5,000 or less. Specific examples of the surfactant include PEG-type nonionic surfactants [e.g., nonyl phenol ethylene oxide (abbreviated as EO hereinafter) (from 1 mole through 40 mole) adduct and stearic acid EO (from 1 mole through 40 mole) adduct], polyvalent alcohol-type nonionic surfactants (e.g., sorbitan palmitic acid monoester, sorbitan stearic acid monoester, and sorbitan stearic acid triester), fluorinecontaining surfactants (e.g., perfluoroalkyl EO (from 1 mole through 50 mole) adduct, perfluoroalkyl carboxylate, and perfluoroalkyl betaine), and modified silicone oils [e.g., polyether-modified silicone oil, and (meth)acrylate-modified silicone oil]. One of these surfactants may be used alone or two or more of these surfactants may be used in combination.

### <Polymerization inhibitor>

Examples of the polymerization inhibitor include phenol compounds [e.g., hydroquinone, hydroquinone monomethyl ether, 2,6-di-t-butyl-p-cresol, 2,2,-methylene-bis-(4-methyl-6-t-butyl phenol), and 1,1,3-tris-(2-methyl-4-hydroxy-5-t-buytl phenyl)butane], sulfur compounds [e.g., dilauryl thio dipropionate], phosphorus compounds [e.g., triphenyl phosphite], and amine compounds [e.g., phenothiazine]. One of these polymerization inhibitors may be used alone or two or more of these polymerization inhibitors may be used in combination.

### <Colorant>

As the colorant, dyes or pigments that dissolve or stably disperse in the inkjet active-energy-ray-curable composition and have an excellent thermal stability are suitable. Among such colorants, solvent dyes are preferable. Two or more kinds of colorants may be appropriately mixed for, for example, color adjustment.

### <Dispersant>

A dispersant is an additive that has a function of adsorbing to the surface of the solid component to disperse the solid component stably in the inkjet active-energy-ray-curable composition. As the dispersant, a known dispersant can be appropriately used.

### <Other components>

Examples of the other components include an organic solvent and water.

### <<Organic solvent>>

The inkjet active-energy-ray-curable composition optionally contains an organic solvent although it is preferable to spare it. The curable composition free of an organic solvent, in particular volatile organic compound (VOC), is preferable because it enhances safety at where the composition is handled and makes it possible to prevent pollution of the environment. Incidentally, the organic solvent represents a conventional non-reactive organic solvent, for example, ether, ketone, xylene, ethyl acetate, cyclohexanone, and toluene, which is clearly distinguished from polymerizable compounds. Furthermore, "free of' an organic solvent means that no organic solvent is substantially contained (or that, for example, an organic solvent is not contained to an extent beyond which the properties of the organic solvent affect the composition). The content thereof is preferably less than 0.1 percent by mass.

### <<Water>>

The inkjet active -energy-ray-curable composition optionally contains water although it is preferable to spare it. "Free of' water means that no water is substantially contained (or that, for example, water is not contained to an extent beyond which the properties of the water affect the composition). The content thereof is preferably less than 1.0 percent by mass. When the content of the water is less than or equal to a certain amount, it is possible to suppress degradation of the curing speed, degradation of the curing strength, increase of water absorbability, and degradation of separability from a support part forming material described below.

### <Method for preparation of inkjet active-energy-ray-curable composition>

The inkjet active-energy-ray-curable composition can be prepared by using the components described above. The preparation devices and conditions are not particularly limited. For example, the curable-composition can be prepared by subjecting a radical-polymerizable compound, a colorant, a dispersant, etc., to a dispersion treatment using a dispersing machine such as a ball mill, a kitty mill, a disk mill, a pin mill, and a DYNO-MILL to prepare a liquid dispersion, further mixing the liquid dispersion with a polymerization initiator, a polymerization inhibitor, and a surfactant, and then mixing the resultant with a solid component.

### [Physical properties of inkjet active-energy-ray-curable composition]

It is preferable that a composition that can be used suitably in an inkjet method have a low viscosity in terms of, for example, dischargeability from nozzles. Hence, in an embodiment, the viscosity of the inkjet active-energy-ray-curable composition of the present disclosure is preferably 200 mPa·s or lower and more preferably 150 mPa·s or lower in an environment at 25 degrees C. The viscosity of the inkjet active-energy-ray-curable composition of the present disclosure is preferably 9 mPa·s or higher in an environment at 25 degrees C in terms of dischargeability and object production accuracy. During object production, it is possible to adjust the viscosity of the active-energy-ray-curable composition by adjusting the temperatures of the inkjet head and an ink flow path.

The viscosity can be measured by a routine method. For example, the method described in JIS Z 8803 may be used. Alternatively, for example, the viscosity can be measured by a cone plate rotary viscometer (VISCOMETER TVE-22L, manufactured by TOKI SANGYO CO.,LTD.) using a cone rotor (1°34' x R24) at a number of rotation of 50 rpm with a setting of the temperature of hemathermal circulating water in the range of 20 degrees C to 65 degrees C. VISCOMATE VM-150III can be used for the temperature adjustment of the circulating water.

It is preferable that a composition that can be used for an inkjet application have a surface tension in a range of 20 mN/m or greater but 40 mN/m or less in an environment at 25 degrees C in terms of discharging stability and object production accuracy. Hence, in an embodiment, the inkjet active-energy-ray-curable composition of the present disclosure has a surface tension of 20 mN/m or greater but 40 mN/m or less in an environment at 25 degrees C.

The surface tension can be measured by a routine method. Examples of such measuring methods include a plate method, a ring method, and a pendant drop method.

### (Three-dimensional object)

By containing a hard solid component, the inkjet-active-energy-ray-curable composition of the present disclosure can impart good mechanical properties to a three-dimensional object (an object produced by material jetting) that is produced by lamination of cured products.

As preferable mechanical properties of a three-dimensional object, the strength of a three-dimensional object expressed by maximum tensile stress is preferably 10 MPa or higher and more preferably 30 MPa or higher. The strength means strength measured by a tensile test (e.g., JIS K7161, JIS K7113, ISO 527, and ASTM D638).

As the extensibility, the tensile fracture extension of a three-dimensional object is preferably 3% or greater and more preferably 8% or greater. The extensibility means extensibility measured by a tensile test (e.g., JIS K7161, JIS K7113, ISO 527, and ASTM D638).

As the heat resistance, deflection temperature under load (HDT) of a three-dimensional object is preferably 50 degrees C or higher.

As the shock resistance, the Izod shock strength of a three-dimensional object is preferably 20 J/m or greater and more preferably 40 J/m or greater. The heat resistance means heat resistance measured by a deflection temperature under load (HDT) test (e.g., JIS K7191-1 and ASTM D648).

### (Three-dimensional object producing method and three-dimensional object producing apparatus)

A three-dimensional object producing method of the present disclosure includes a discharging step of discharging the inkjet active-energy-ray-curable composition of the present disclosure by an inkjet method and a curing step of curing the inkjet active-energy-ray-curable composition discharged, by irradiation with active energy rays, includes sequentially repeating the discharging step and the curing step, and further includes other steps as needed.

A three-dimensional object producing apparatus of the present disclosure includes a discharging unit configured to discharge the inkjet active-energy-ray-curable composition of the present disclosure by an inkjet method and a curing unit configured to cure the inkjet active-energy-ray-curable composition discharged, by irradiation with active energy rays, and further includes other units as needed.

### <Discharging step and discharging unit>

The discharging step is a step of discharging the inkjet active-energy-ray-curable composition of the present disclosure by an inkjet method.

The discharging unit is a unit configured to discharge the inkjet active-energy-ray-curable composition of the present disclosure by an inkjet method.

In the discharging step, it is preferable to discharge the inkjet active-energy-ray-curable composition of the present disclosure by an inkjet method over a stage having a lifting function. The inkjet active-energy-ray-curable composition discharged over the stage forms a liquid film.

### <Curing step and curing unit>

The curing step is a step of curing the inkjet active-energy-ray-curable composition discharged, by irradiation with active energy rays.

The curing unit is a unit configured to cure the inkjet active-energy-ray-curable composition discharged, by irradiation with active energy rays.

In the curing step, the liquid film formed of the inkjet active-energy-ray-curable composition formed over the stage is cured by irradiation with active energy rays.

### -Active energy rays-

Light is preferable as the active energy rays used for curing the inkjet active-energy-ray-curable composition. Particularly, ultraviolet rays having a wavelength of from 220 nm through 400 nm are preferable.

The active energy rays are not particularly limited to ultraviolet rays, so long as they are able to give necessary energy for allowing polymerization reaction of polymerizable components in the composition to proceed. Examples of the active energy rays include electron beams, α-rays, β-rays, γ-rays, and X-rays, in addition to ultraviolet rays.

When a light source having a particularly high energy is used, polymerization reaction can be allowed to proceed without a polymerization initiator. In addition, in the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

The three-dimensional object producing method of the present disclosure sequentially repeats the discharging step and the curing step to produce a three-dimensional object having a desired shape.

A three-dimensional object producing method and an object producing apparatus when the inkjet active-energy-ray-curable composition of the present disclosure is used as a model part forming material will be described below. However, applications of the inkjet active-energy-ray-curable composition of the present disclosure are not limited to such embodiments.

### -Object producing apparatus-

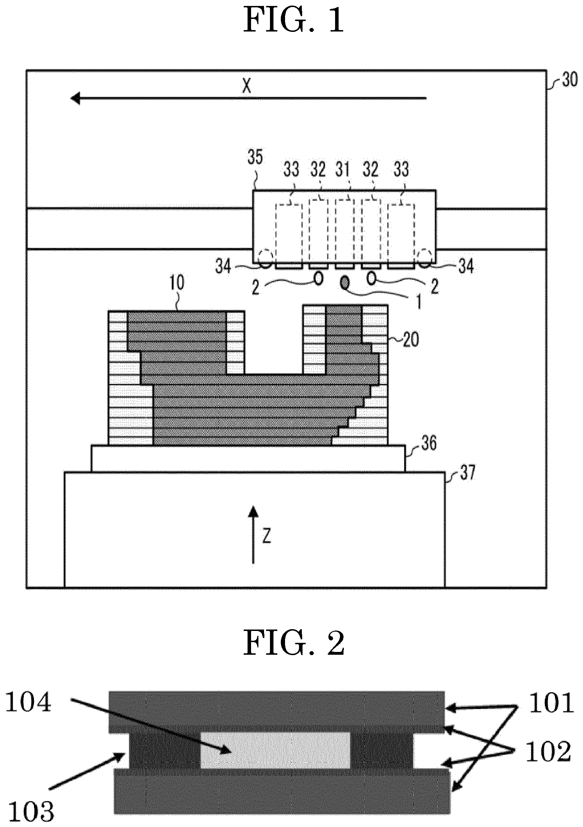

FIG. 1 is a schematic view illustrating an object producing apparatus according to an embodiment of the present disclosure.

The object producing apparatus 30 includes head units 31 and 32, an ultraviolet irradiator 33, a roller 34, a carriage 35, and a stage 37. The head unit 31 is configured to discharge a model part forming material 1. The head unit 32 is configured to discharge a support part forming material 2. The ultraviolet irradiator 33 is configured to cure the model part forming material 1 and support part forming material 2 discharged, by irradiation with ultraviolet rays. The roller 34 is configured to smooth liquid films of the model part forming material 1 and the support part forming material 2. The carriage 35 is configured to move units such as the head units 31 and 32 in the X direction of FIG. 1 reciprocably. The stage 37 is configured to move a substrate 36 in the Z direction of FIG .1 and the Y direction, which is the depth direction of FIG. 1. Instead of the stage 37, the carriage 35 may move in the Y direction.

When there are a plurality of model part forming materials for different colors, the object producing apparatus 30 may include a plurality of head units 31 configured to discharge the model part forming materials having different colors. Nozzles of a known inkjet printer can be suitably used as nozzles of the head units 31 and 32.

Examples of metals that can be used in the roller 34 include SUS300 series, 4000 series, 600 series, hexavalent chromium, silicon nitride, and tungsten carbide. Alternatively, any of these metals coated with fluorine or silicone may be used in the roller 34. Among these metals, SUS600 series are preferable in terms of strength and processability.

When using the roller 34, the object producing apparatus 30 laminates layers over the stage 37 while moving down the stage 37 in accordance with the number of layers laminated, in order to maintain a constant gap between the roller 34 and the surface of the object. In a preferred configuration, the roller 34 is disposed adjacently to the ultraviolet irradiator 33.

In order to prevent drying of the ink during suspension of the operation, the object producing apparatus 30 may include a unit such as a cap configured to close the nozzles of the head units 31 and 32. Moreover, in order to prevent clogging of the nozzles during a long-time continuous operation, the object producing apparatus 30 may include a maintenance mechanism configured to maintain the head.

### -Object producing method-

Steps performed by the object producing apparatus will be described below.

While moving the carriage 35 or the stage 37, the engine of the object producing apparatus 30 causes the head unit 31 to discharge liquid droplets of the model part forming material 1 and the head unit 32 to discharge liquid droplets of the support part forming material 2 based on two-dimensional data representing the bottommost cross-section among input two-dimensional data. As a result, the liquid droplets of the model part forming material 1 are located at the positions corresponding to the pixels representing a model part in the two-dimensional data representing the bottommost cross-section, the liquid droplets of the support part forming material 2 are located at the positions corresponding to the pixels representing a support part in the two-dimensional data, and liquid films are formed through mutual contact of the liquid droplets located at adjacent positions. When forming one object, a liquid film having a cross-sectional shape is formed in the center of the stage 37. When forming a plurality of objects, the object producing apparatus 30 may form a plurality of liquid films having respective cross-sectional shapes over the stage 37 or may laminate liquid films over an object produced previously.

It is preferable to install heaters in the head units 31 and 32. Moreover, it is preferable to install pre-heaters on the path through which the model part forming material is supplied to the head unit 31 and the path through which the support part forming material is supplied to the head unit 32.

In the smoothing step, the roller 34 scrapes away any excessive parts of the model part forming material and support part forming material discharged over the stage 37 to smooth out any protrusions and recesses of the liquid films or layers formed of the model part forming material and support part forming material. The smoothing step may be performed once every time a layer is laminated in the Z axis direction, or may be performed once every time two through fifty layers are laminated. In the smoothing step, the roller 34 may be halted or may be rotated at a positive or negative relative speed in the travelling direction of the stage 37. The rotation speed of the roller 34 may be a constant speed, a constant acceleration, or a constant deceleration. The rotation speed of the roller 34 expressed as the absolute value of the relative speed with respect to the stage 37 is preferably 50 mm/s or greater but 400 mm/s or less. When the relative speed is excessively low, smoothing is insufficient and smoothness is spoiled. When the relative speed is excessively high, the apparatus needs to have a large size, liquid droplets discharged tend to be located at wrong positions due to, for example, vibration, and smoothness may be degraded as a result. In the smoothing step, it is preferable that the rotation direction of the roller 34 be reverse from the travelling direction of the head units 31 and 32.

In the curing step, the engine of the object producing apparatus 30 causes the carriage 35 to move the ultraviolet irradiator 33 to irradiate the liquid films formed in the discharging step with ultraviolet rays corresponding to the wavelength of the photopolymerization initiator contained in the model part forming material and the support part forming material. In this way, the object producing apparatus 30 cures the liquid films and forms layers.

After the bottommost layer is formed, the engine of the object producing apparatus 30 moves down the stage by a distance corresponding to one layer.

While moving the carriage 35 or the stage 37, the engine of the object producing apparatus 30 causes liquid droplets of the model part forming material 1 to be discharged and liquid droplets of the support part forming material 2 to be discharged based on two-dimensional image data representing the second bottommost cross-section. The discharging method is the same as when forming the liquid films of the bottommost layer. As a result, liquid films having cross-sectional shapes represented by the second bottommost two-dimensional data are formed over the bottommost layer. Further, the engine of the object producing apparatus 30 causes the carriage 35 to move the ultraviolet irradiator 33 to irradiate the liquid films with ultraviolet rays, to cure the liquid films and form the second bottommost layer over the bottommost layer.

The engine of the object producing apparatus 30 repeats formation of liquid films and curing in the same manner as described above using the input two-dimensional data in the order of closeness to the bottommost layer, to laminate layers. The number of times of repetition is different depending on, for example, the number of input two-dimensional image data, and the height and shape of the three-dimensional model. When object production using all two-dimensional image data is completed, a model-part object in a state of being supported by a support part is obtained.

The object produced by the object producing apparatus 30 includes a model part and a support part. The support part is removed from the object after object production. Examples of the removing method include physical removal and chemical removal. In the physical removal, a mechanical force is applied to remove the support part. On the other hand, in the chemical removal, the object is dipped in a solvent to disintegrate and remove the support part. The method for removing the support part is not particularly limited, but the chemical removal is preferred because the physical removal has a risk of breaking the object. Moreover, in consideration of the costs, it is preferable to remove the support part by dipping in water. When employing the removing method by dipping in water, a support part forming material of which cured product has water disintegrability is selected.

As described above, the inkjet active-energy-ray-curable composition of the present disclosure is suitable for use in inkjet applications, particularly, production of a three-dimensional object by inkjet. Hence, the present disclosure includes a three-dimensional object formed using the active-energy-ray-curable composition of the present disclosure. The method for producing such a three-dimensional object is not particularly limited so long as the method employs inkjet, and examples of the method include the method described in detail in the -Object producing method- section described above.

### (Stored container)

A stored container means a container in a state in which the inkjet active-energy-ray-curable composition is stored. The container that stores the inkjet active-energy-ray-curable composition can be used as a cartridge or a bottle. Therefore, users can avoid direct contact with the inkjet active -energy-ray-curable composition during operations such as transfer or replacement of the inkjet active-energy-ray-curable composition, so that fingers and clothes are prevented from contamination. Furthermore, inclusion of foreign matters such as dust in the inkjet active -energy-ray-curable composition can be prevented. In addition, the container can be of any size, any form, and any material. For example, the container can be designed to a particular application. It is preferable to use a light blocking material to block the light or cover a container with a light blocking sheet, etc.

### EXAMPLES

The present disclosure will be described below specifically by way of Examples. The present disclosure should not be construed as being limited to these Examples.

### <Preparation of inkjet active-energy-ray-curable composition>

### (Comparative Example 1)

Isobornyl acrylate (obtained from Osaka Organic Chemical Industry Ltd.) (65 parts by mass), bifunctional acrylate (product name: A-600, obtained from Shin-Nakamura Chemical Co., Ltd.) (24 parts by mass), and urethane acrylate oligomer (product name: VIOLET LIGHT UV-6630B, obtained from Nippon Gohsei Co., Ltd.) (11 parts by mass), were mixed uniformly. Next, diphenyl (2,4,6-trimethylbenzoyl)phosphine oxide (product name: OMNIRAD TPO, obtained from BASF GmbH) (4 parts by mass) serving as a photopolymerization initiator was added to the resultant and mixed uniformly, to obtain an inkjet active-energy-ray-curable composition of Comparative Example 1.

### <Preparation of inkjet active-energy-ray-curable composition containing hard solid component>

### (Example 1)

Isobornyl acrylate (obtained from Osaka Organic Chemical Industry Ltd.) (65 parts by mass), bifunctional acrylate (product name: A-600, obtained from Shin-Nakamura Chemical Co., Ltd.) (24 parts by mass), and urethane acrylate oligomer (product name: VIOLET LIGHT UV-6630B, obtained from Nippon Gohsei Co., Ltd.) (11 parts by mass) were mixed uniformly. Next, diphenyl (2,4,6-trimethylbenzoyl)phosphine oxide (product name: OMNIRAD TPO, obtained from BASF GmbH) (4 parts by mass) serving as a photopolymerization initiator was added to the resultant and mixed uniformly. Next, a hard solid component (ADMAFINE K180SM-C5, obtained from Admatechs Co., Ltd.) (10 parts by mass) was added to the resultant and mixed uniformly. Next, the resultant was passed through a filter (product name: CCP-FX-C1B, obtained from ADVANTEC Co., Ltd., with an average pore diameter of 3 micrometers), to obtain an inkjet active-energy-ray-curable composition of Example 1.

### (Examples 2 to 8)

Inkjet active -energy-ray-curable compositions of Examples 2 to 8 were prepared in the same production manner as in Example 1, according to the formation of Table 1 below. The unit of the formulation of Table 1 is "part by mass".

Next, "HSP value", "viscosity", and "solid settle ability" of the obtained inkjet active-energy-ray-curable compositions and "elastic modulus", "tensile strength", and "shock strength" of cured products formed of the inkjet active-energy-ray-curable compositions were measured in the manners described below. The results are presented in Tables 4-1 and 4-2.

### <Measurement of HSP value>

The HSP value (A) was calculated using computer software (HSPIP) based on the structure of a silane coupling agent used for surface reformation of the hard solid component.

As the HSP value (B), the HSP value of each of the liquid components of the composition (i.e., "radical-polymerizable monomer" and "radical-polymerizable oligomer" in Table 1) was calculated using computer software (HSPIP). Next, the vectorial sum of the products between the HSP values of the liquid components and the volume ratios of the liquid components with respect to the whole of the liquid components was calculated. The HSP value (B) was obtained based on this calculation.

### <Method for measuring viscosity>

The viscosity was measured using a cone plate rotary viscometer VISCOMETER TVE-22L (obtained from TOKI SANGYO CO., LTD.). The temperature of the measurement chamber was fixed at 25 degrees C using a high-temperature circulation tank. A cone rotor (1°34' x R24) was used as a rotor.

### <Method for evaluating solid settleability>

The inkjet active -energy-ray-curable composition was left to stand still in a lightblocked environment, and whether the solid component had settled was visually confirmed.

### (Evaluation criteria)

A: Settlement of no solid component occurred for two weeks or longer
B: Settlement of any solid component occurred within one week or longer but two weeks or shorter.
C: Settlement of any solid component occurred within one week.

### [Method for producing measurement sample for elastic modulus and tensile strength]

As illustrated in FIG. 2, an OHP sheet 102 was placed over a glass plate 101, and a silicon mold 103 (with a tensile test shape No. 6, JIS K 6251, with a thickness of 1 mm) was placed over the OHP sheet and closely attached to the OHP sheet.

Next, the silicon mold 103 was filled with the ink 104 and covered with an OHP sheet 102, which was further covered with a glass plate 101 (in other words, the inkjet active -energy-ray-curable composition was put in an oxygen shut-off environment).

Next, using an ultraviolet irradiator (obtained from Ushio Inc., SPOT CURE SP5-250DB), the inkjet active-energy-ray-curable composition was irradiated with ultraviolet rays having an irradiation intensity of 200 mW/cm² for 5 minutes through the glass plate 101.

Next, the inkjet active -energy-ray-curable composition was irradiated with ultraviolet rays having an irradiation intensity of 200 mW/cm² for 5 minutes through the glass plate 101 over the opposite surface to the surface that was irradiated with ultraviolet rays previously. The wavelength of the ultraviolet rays emitted by the ultraviolet irradiator was set to 365 nm.

Next, the OHP sheets 102 were peeled, and the test piece was taken out from the silicon mold 103 and left to stand still in an environment at a temperature of 23 degrees C at a relative humidity of 50% for 24 hours.

### <Method for measuring elastic modulus and tensile strength>

The elastic modulus and the tensile strength were measured using a precision universal tester (AUTOGRAPH AG-X, obtained from Shimadzu Corporation). Tensile test of the test piece was performed at a tensile speed of 5 mm/min at a distance of 50 mm between tensile jigs, to obtain the slope in a strain range of from 0.05% through 0.25% of a stress-strain curve as a measurement of the elastic modulus and obtain the maximum stress in a time range of from the start of the test until fracture of the sample as a measurement of the tensile strength.

### <Method for producing measurement sample for shock strength>

As illustrated in FIG. 2, an OHP sheet 102 was placed over a glass plate 101, and a silicon mold 103 (with a length of 63.5 mm, a width of 12.7 mm, and a thickness of 3 mm) was placed over the OHP sheet 102 and closely attached to the OHP sheet 102.

Next, the silicon mold 103 was filled with the ink 104 and covered with an OHP sheet 102, which was further covered with a glass plate 101 (in other words, the inkjet active -energy-ray-curable composition was put in an oxygen shut-off environment).

Next, using an ultraviolet irradiator (obtained from Ushio Inc., SPOT CURE SP5-250DB), the inkjet active-energy-ray-curable composition was irradiated with ultraviolet rays having an irradiation intensity of 200 mW/cm² for 30 minutes through the glass plate 101.

Next, the inkjet active -energy-ray-curable composition was irradiated with ultraviolet rays having an irradiation intensity of 200 mW/cm² for 30 minutes through the glass plate 101 over the opposite surface to the surface that was irradiated with ultraviolet rays previously. The wavelength of the ultraviolet rays emitted by the ultraviolet irradiator was set to 365 nm.

Next, the OHP sheets 102 were peeled, and the test piece was taken out from the silicon mold 103 and left to stand still in an environment at a temperature of 23 degrees C at a relative humidity of 50% for 24 hours.

### <Method for measuring shock strength>

The shock strength was measured using a digital impact tester (IMPACT TESTER, obtained from Toyo Seiki Seisaku-sho, Ltd.) according to Izod method compliant with ASTM D 256.

**Table 1**

| Material | | | | Comp. Ex. 1 part by mas | Ex. 1 part by mass | Ex. 2 part by mass | Ex. 3 part by mass | Ex. 4 part by mass | Ex. 5 part by mass | Ex. 6 part by mass |
|---|---|---|---|---|---|---|---|---|---|---|
| Kind | Name | Product name | Volume avg. particle dia. (nm) | | | | | | | |
| Radical-polymerizable monomer | Isobornyl acrylate | IBXA | - | 65.0 | 65.0 | 65.0 | 65.0 | 65.0 | 65.0 | 65.0 |
| | Polyethylene glycol#600 diacrylate | A-600 | - | 24.0 | 24.0 | 24.0 | 24.0 | 24.0 | 24.0 | 24.0 |
| Radical-polymerizable oligomer | Urethane acrylate oligomer | UV-6630B | - | 11.0 | 11.0 | 11.0 | 11.0 | 11.0 | 11.0 | 11.0 |
| Hard solid component | Surface reformed silica particles | ADMAFINE K180SM-C5 | 180 | - | 10.0 | 20.0 | - | - | - | - |
| | Surface reformed silica particles | ADMAFINE SC2500-SMJ | 1,000 | - | - | - | 10.0 | 20.0 | - | - |
| | Surface reformed silica particles | ADMANANO YA10C-SM1 | 10 | - | - | - | - | - | 10.0 | 20.0 |
| | Surface reformed silica particles | ADMANANO YA100C-SM2 | 10 | - | - | - | - | - | - | - |
| | Surface reformed silica particles | ADMAFINE 3SM-C11 | 280 | - | - | - | - | - | - | - |
| Polymerization initiator | OMNIRAD TPO | | - | 4.0 | 4.0 | 4.0 | 4.0 | 4.0 | 4.0 | 4.0 |
| Total amount | | | | 104.0 | 114.0 | 124.0 | 114.0 | 124.0 | 114.0 | 124.0 |
| Radical polymerizable monomer content (% by mass) relative to total amount of composition | | | | 85.6 | 78.1 | 71.8 | 78.1 | 71.8 | 78.1 | 71.8 |
| Radical oligomer content (% by mass) relative to total amount of composition | | | | 12.9 | 14.1 | 15.3 | 14.1 | 15.3 | 14.1 | 15.3 |

**Table 2**

| Material | | | | Ex. 7 part by mas | Ex. 8 part by mass | Ex. 9 part by mass | Ex. 10 part by mass |
|---|---|---|---|---|---|---|---|
| Kind | Name | Product name | Volume avg. particle dia. (nm) | | | | |
| Radical - polymerizable monomer | Isobornyl acrylate | IBXA | - | 65.0 | 65.0 | 65.0 | 65.0 |
| | Polyethylene glycol #600 diacrylate | A-600 | - | 24.0 | 24.0 | 24.0 | 24.0 |
| Radical - polymerizable oligomer | Urethane acrylate oligomer | UV-6630B | - | 11.0 | 11.0 | 11.0 | 11.0 |
| Hard solid component | Surface reformed silica particles | ADMAFINE K180SM-C6 | 180 | - | - | - | - |
| | Surface reformed silica particles | ADMAFINE SC2500-SMJ | 1,000 | - | - | - | - |
| | Surface reformed silica particles | ADMANANO YA10C-SM1 | 10 | - | - | - | - |
| | Surface reformed silica particles | ADMANANO YA100C-SM2 | 10 | 10.0 | 20.0 | - | - |
| | Surface reformed silica particles | ADMAFINE 3SM-C11 | 280 | - | - | 10.0 | 20.0 |
| Polymerization initiator | OMNIRAD TPO | | - | 4.0 | 4.0 | 4.0 | 4.0 |
| Total amount | | | | 114.0 | 124.0 | 114.0 | 124.0 |
| Radical polymerizable monomer content (% by mass) relative to total amount of composition | | | | 78.1 | 71.8 | 78.1 | 71.8 |
| Radical oligomer content (% by mass) relative to total amount of composition | | | | 14.1 | 15.3 | 14.1 | 15.3 |

**Table 3**

| | | | Comp. Ex. | Ex. | | | | | | | | | |
|---|---|---|---|---|---|---|---|---|---|---|---|---|---|
| | | | 1 | 1 | 2 | 3 | 4 | 5 | 6 | 7 | 8 | 9 | 10 |
| | | | vol% | vol% | vol% | vol% | vol% | vol% | vol% | vol% | vol% | vol% | vol% |
| Hard solid component | Surface reformed silica particles | ADMA FINE K180S M-C5 | - | 4.5 | 9.1 | - | - | - | - | - | - | - | - |
| | Surface reformed silica particles | ADMA FINE SC250 0-SMJ | - | - | - | 4.5 | 9.1 | - | - | - | - | - | - |
| | Surface reformed silica particles | ADMA NANO YA10C -SM1 | - | - | - | - | - | 4.5 | 9.1 | - | - | - | - |
| | Surface reformed silica particles | ADMA NANO YA100 C-SM2 | - | - | - | - | - | - | - | 4.5 | 9.1 | - | - |
| | Surface reformed silica particles | ADMA FINE 3SM-C11 | - | - | - | - | - | - | - | - | - | 4.5 | 9.1 |

**Table 4-1**

| | | | | Comp. Ex. | Ex. | | | | |
|---|---|---|---|---|---|---|---|---|---|
| | | | | 1 | 1 | 2 | 3 | 4 | 5 |
| Hard solid component | | HSP value (A) | | - | 7.7 | 7.7 | 7.7 | 7.7 | 7.7 |
| Liquid component | | HSP value (B) | | 8.8 | 8.8 | 8.8 | 8.8 | 8.8 | 8.8 |
| HSP value (B)-HSP value (A) | | | | - | 1.1 | 1.1 | 1.1 | 1.1 | 1.1 |
| Evaluation result | Ink property | | Viscosity [mPa·s] | 40.4 | 49.4 | 194.6 | 46.1 | 84.7 | 51.9 |
| | | | Solid settleability | A | A | B | C | C | A |
| | Cured product property | Strength | Elastic modulus [GPa] | 0.9 | 1.6 | 1.8 | 1.2 | 1.5 | 1.2 |
| | | | Tensile strength [MPa] | 14 | 22 | 23 | 16 | 19 | 16 |
| | | Shock resistance | Shock strength [J/m] | 81 | 88 | 85 | 88 | 83 | 65 |

**Table 4-2**

| | | | | Ex. | | | | |
|---|---|---|---|---|---|---|---|---|
| | | | | 6 | 7 | 8 | 9 | 10 |
| Hard solid component | | HSP value (A) | | 7.7 | 7.7 | 7.7 | 7.7 | 7.7 |
| Liquid component | | HSP value (B) | | 8.8 | 8.8 | 8.8 | 8.8 | 8.8 |
| HSP value (B)-HSP value (A) | | | | 1.1 | 1.1 | 1.1 | 1.1 | 1.1 |
| Evaluation result | Ink property | | Viscosity [mPa·s] | 71.8 | 56.1 | 90.0 | 46.8 | 158.4 |
| | | | Solid settleability | A | A | A | B | C |
| | Cured product property | Strength | Elastic modulus [GPa] | 1.6 | 1.1 | 1.3 | 1.5 | 1.9 |
| | | | Tensile strength [MPa] | 21 | 15 | 17 | 21 | 23 |
| | | Shock resistance | Shock strength [J/m] | 47 | 66 | 64 | 89 | 81 |

The details of the materials used in Examples and Comparative Example are as described below.

### (Radical-polymerizable monomer)

- IBXA: Isobornyl acrylate, obtained from Osaka Organic Chemical Industry Ltd.
- A-600: Polyethylene glycol #600 diacrylate, obtained from Shin-Nakamura Chemical Co., Ltd.

### (Radical-polymerizable oligomer)

- UV-6630B: Urethane acrylate oligomer, with two functional groups, obtained from Nippon Synthetic Chemical Industry Co., Ltd.

### (Polymerization initiator)

- OMNIRAD TPO: obtained from BASF GmbH

### (Hard solid component)

- ADMAFINE K180SM-C5: Surface reformed silica particles, with a volume average particle diameter of 180 nm, obtained from Admatechs Co., Ltd.
- ADMAFINE SC2500-SMJ: Surface reformed silica particles, with a volume average particle diameter of 1,000 nm, obtained from Admatechs Co., Ltd.
- ADMAFINE 3SM-C11: Surface reformed silica particles, with a volume average particle diameter of 280 nm, obtained from Admatechs Co., Ltd.
- ADMANANO YA10C-SM1: Surface reformed silica particles, with a volume average particle diameter of 10 nm, obtained from Admatechs Co., Ltd.
- ADMANANO YA100C-SM2: Surface reformed silica particles, with a volume average particle diameter of 10 nm, obtained from Admatechs Co., Ltd.

ADMAFINE was produced by a VMC method (i.e., a method of obtaining particles by cooling vaporized silicon), and had a broad particle size distribution.

On the other hand, ADMANANO was produced by a wet synthesis method, and had a sharp particle size distribution.

The inkjet active -energy-ray-curable compositions of Examples 1 to 8 had a viscosity of 200 cp or lower, and were hence stably discharchageable from an inkjet head.

From comparison with Comparative Example, it was revealed that the cured products formed of the inkjet active-energy-ray-curable compositions of Examples 1 to 8 were improved in elastic modulus and strength.

Moreover, it was revealed that the cured products formed of the inkjet active-energy-ray-curable compositions of Examples 1 to 4 were improved in elastic modulus, tensile strength, and shock resistance at the same time.

Furthermore, it was revealed that the inkjet active-energy-ray-curable compositions of Examples 1 and 2 had a good ink particle settleability.

## Claims

1. An inkjet active-energy-ray-curable composition comprising:
a hard solid component; and
a radical-polymerizable monomer,
wherein a difference (a HSP value (B) - a HSP value (A)) between the HSP value (A) of a substance that constitutes a surface of the hard solid component and the HSP value (B) of a liquid component of the inkjet active-energy-ray-curable composition is 0.5 (cal/cm³)^{0.5} or greater but 3.0 (cal/cm³)^{0.5} or less, when measured according to the method recited in the description,
the hard solid component is silica of which surface is reformed with a silane coupling agent, and
the radical-polymerizable monomer comprises an acrylic-based monomer or a methacrylic-based monomer.

2. The inkjet active -energy-ray-curable composition according to claim 1,
wherein the silane coupling agent contains an unsaturated double bond.

3. The inkjet active -energy-ray-curable composition according to claim 1 or 2,
wherein a viscosity of the inkjet active -energy-ray-curable composition at 25 degrees C is 200 mPa·s or lower, when measured according to the method recited in the description.

4. The inkjet active -energy-ray-curable composition according to any one of claims 1 to 3,
wherein a content of the hard solid component is 0.5% by volume or greater but 40.0% by volume or less relative to a volume of a total amount of the inkjet active-energy-ray-curable composition.

5. The inkjet active -energy-ray-curable composition according to claim 4,
wherein the content of the hard solid component is 1.0% by volume or greater but 20.0% by volume or less relative to a volume of a total amount of the inkjet active-energy-ray-curable composition.

6. The inkjet active -energy-ray-curable composition according to any one of claims 1 to 5,
wherein a volume average particle diameter of the hard solid component is 5 nm or greater but 1,000 nm or less, when measured with a particle size analyzer.

7. The inkjet active -energy-ray-curable composition according to claim 6,
wherein the volume average particle diameter of the hard solid component is 120 nm or greater but 250 nm or less, when measured with a particle size analyzer.

8. The inkjet active -energy-ray-curable composition according to any one of claims 1 to 7,
wherein an abundance ratio of a solid component having a particle diameter that is 0.7 times or less or 1.4 times or more a volume average particle diameter of the hard solid component is 10% or greater.

9. The inkjet active-energy-ray-curable composition according to claim 8,
wherein the abundance ratio of a solid component having a particle diameter that is 0.7 times or less or 1.4 times or more a volume average particle diameter of the hard solid component is 20% or greater.

10. The inkjet active -energy-ray-curable composition according to any one of claims 1 to 9,
wherein the radical-polymerizable monomer comprises an acrylic-based monomer.

11. The inkjet active -energy-ray-curable composition according to any one of claims 1 to 10,
wherein a content of the radical-polymerizable monomer is 50.0% by mass or greater but 95.0% by mass or less relative to a total amount of the inkjet active-energy-ray-curable composition.

12. The inkjet active -energy-ray-curable composition according to any one of claims 1 to 11, further comprising
a polymerization initiator,
wherein a content of the polymerization initiator is 0.1% by mass or greater but 10.0% by mass or less relative to a total amount of the inkjet active-energy-ray-curable composition.

13. A three-dimensional object producing method comprising:
discharging the inkjet active-energy-ray-curable composition according to any one of claims 1 to 12 by an inkjet method; and
curing the inkjet active-energy-ray-curable composition discharged, by irradiation with active energy rays,
wherein the three-dimensional object producing method comprises sequentially repeating the discharging and the curing.

14. A three-dimensional object producing apparatus comprising:
a discharging unit configured to discharge the inkjet active -energy-ray-curable composition according to any one of claims 1 to 12 by an inkjet method; and
a curing unit configured to cure the inkjet active-energy-ray-curable composition discharged, by irradiation with active energy rays.

## Patentansprüche

1. Durch aktive Energiestrahlen härtbare Tintenstrahlzusammensetzung, Folgendes umfassend:
eine harte Feststoffkomponente; und
ein radikalisch polymerisierbares Monomer,
wobei eine Differenz (ein HSP-Wert (B) - ein HSP-Wert (A)) zwischen dem HSP-Wert (A) einer Substanz, die eine Oberfläche der harten Feststoffkomponente bildet, und dem HSP-Wert (B) einer flüssigen Komponente der durch aktive Energiestrahlen härtbaren Tintenstrahlzusammensetzung 0,5 (cal/cm³)^{0,5} oder mehr, aber 3,0 (cal/cm³)^{0,5} oder weniger beträgt, wenn sie gemäß dem in der Beschreibung angeführten Verfahren gemessen wird,
die harte Feststoffkomponente Siliziumdioxid ist, dessen Oberfläche mit einem Silankopplungsmittel reformiert ist, und
das radikalisch polymerisierbare Monomer ein Monomer auf Acrylbasis oder ein Monomer auf Methacrylbasis umfasst.

2. Durch aktive Energiestrahlen härtbare Tintenstrahlzusammensetzung nach Anspruch 1,
wobei das Silankopplungsmittel eine ungesättigte Doppelbindung enthält.

3. Durch aktive Energiestrahlen härtbare Tintenstrahlzusammensetzung nach Anspruch 1 oder 2,
wobei eine Viskosität der durch aktive Energiestrahlen härtbaren Tintenstrahlzusammensetzung bei 25 Grad C 200 mPa·s oder weniger beträgt, wenn sie gemäß dem in der Beschreibung angegebenen Verfahren gemessen wird.

4. Durch aktive Energiestrahlen härtbare Tintenstrahlzusammensetzung nach einem der Ansprüche 1 bis 3,
wobei ein Gehalt der harten Feststoffkomponente 0,5 Vol.-% oder mehr, aber 40,0 Vol.-% oder weniger in Bezug auf ein Volumen einer Gesamtmenge der durch aktive Energiestrahlen härtbaren Tintenstrahlzusammensetzung beträgt.

5. Durch aktive Energiestrahlen härtbare Tintenstrahlzusammensetzung nach Anspruch 4,
wobei der Gehalt der harten Feststoffkomponente 1,0 Vol.-% oder mehr, aber 20,0 Vol.-% oder weniger in Bezug auf ein Volumen einer Gesamtmenge der durch aktive Energiestrahlen härtbaren Tintenstrahlzusammensetzung beträgt.

6. Durch aktive Energiestrahlen härtbare Tintenstrahlzusammensetzung nach einem der Ansprüche 1 bis 5,
wobei ein volumenmittlerer Teilchendurchmesser der harten Feststoffkomponente 5 nm oder mehr, aber 1 000 nm oder weniger beträgt, wenn er mit einem Teilchengrößenanalysator gemessen wird.

7. Durch aktive Energiestrahlen härtbare Tintenstrahlzusammensetzung nach Anspruch 6,
wobei der volumenmittlere Teilchendurchmesser der harten Feststoffkomponente 120 nm oder mehr, aber 250 nm oder weniger beträgt, wenn er mit einem Teilchengrößenanalysator gemessen wird.

8. Durch aktive Energiestrahlen härtbare Tintenstrahlzusammensetzung nach einem der Ansprüche 1 bis 7,
wobei ein Häufigkeitsverhältnis einer Feststoffkomponente mit einem Teilchendurchmesser, der das 0,7-Fache oder weniger oder das 1,4-Fache oder mehr eines volumenmittleren Teilchendurchmessers der harten Feststoffkomponente beträgt, 10 % oder mehr beträgt.

9. Durch aktive Energiestrahlen härtbare Tintenstrahlzusammensetzung nach Anspruch 8,
wobei das Häufigkeitsverhältnis einer Feststoffkomponente mit einem Teilchendurchmesser, der das 0,7-Fache oder weniger oder das 1,4-Fache oder mehr eines volumenmittleren Teilchendurchmessers der harten Feststoffkomponente beträgt, 20 % oder mehr beträgt.

10. Durch aktive Energiestrahlen härtbare Tintenstrahlzusammensetzung nach einem der Ansprüche 1 bis 9,
wobei das radikalisch polymerisierbare Monomer ein Monomer auf Acrylbasis umfasst.

11. Durch aktive Energiestrahlen härtbare Tintenstrahlzusammensetzung nach einem der Ansprüche 1 bis 10,
wobei ein Gehalt des radikalisch polymerisierbaren Monomers 50,0 Massenprozent oder mehr, aber 95,0 Massenprozent oder weniger in Bezug auf eine Gesamtmenge der durch aktive Energiestrahlen härtbaren Tintenstrahlzusammensetzung beträgt.

12. Durch aktive Energiestrahlen härtbare Tintenstrahlzusammensetzung nach einem der Ansprüche 1 bis 11, ferner Folgendes umfassend:
einen Polymerisationsinitiator,
wobei ein Gehalt des Polymerisationsinitiators 0,1 Massenprozent oder mehr, aber 10,0 Massenprozent oder weniger in Bezug auf eine Gesamtmenge der durch aktive Energiestrahlen härtbaren Tintenstrahlzusammensetzung beträgt.

13. Verfahren zur Herstellung eines dreidimensionalen Objekts, Folgendes umfassend:
Abgeben der durch aktive Energiestrahlen härtbaren Tintenstrahlzusammensetzung nach einem der Ansprüche 1 bis 12 durch ein Tintenstrahlverfahren; und
Aushärten der abgegebenen, durch aktive Energiestrahlen härtbaren Tintenstrahlzusammensetzung durch Bestrahlung mit aktiven Energiestrahlen,
wobei das Verfahren zur Herstellung eines dreidimensionalen Objekts die aufeinanderfolgende Wiederholung des Abgebens und des Aushärtens umfasst.

14. Gerät zur Herstellung eines dreidimensionalen Objekts, Folgendes umfassend:
eine Abgabeeinheit, konfiguriert zum Abgeben der durch aktive Energiestrahlen härtbaren Tintenstrahlzusammensetzung nach einem der Ansprüche 1 bis 12 durch ein Tintenstrahlverfahren; und
eine Aushärteeinheit, konfiguriert zum Aushärten der abgegebenen, durch aktive Energiestrahlen härtbaren Tintenstrahlzusammensetzung durch Bestrahlung mit aktiven Energiestrahlen.

## Revendications

1. Composition durcissable par rayonnement à énergie active à jet d'encre, comprenant :
un composant solide dur ; et
un monomère polymérisable radical,
dans laquelle une différence (une valeur HSP (B) - une valeur HSP (A)) entre la valeur HSP (A) d'une substance qui constitue une surface du composant solide dur et la valeur HSP (B) d'un composant liquide de la composition durcissable par rayonnement à énergie active à jet d'encre est de 0,5 (cal/cm³)^{0,5} ou plus mais de 3,0 (cal/cm³)^{0,5} ou moins, lorsqu'elle est mesurée selon le procédé indiqué dans la description,
le composant solide dur est de la silice dont la surface est reformée avec un agent de couplage de silane, et
le monomère polymérisable radical comprend un monomère à base d'acrylique ou un monomère à base de méthacrylique.

2. Composition durcissable par rayonnement à énergie active à jet d'encre selon la revendication 1,
dans laquelle l'agent de couplage de silane contient une double liaison insaturée.

3. Composition durcissable par rayonnement à énergie active à jet d'encre selon la revendication 1 ou 2,
dans laquelle une viscosité de la composition durcissable par rayonnement à énergie active à jet d'encre à 25 degrés C est de 200 mPa·s ou moins, lorsqu'elle est mesurée selon le procédé indiqué dans la description.

4. Composition durcissable par rayonnement à énergie active à jet d'encre selon l'une quelconque des revendications 1 à 3,
dans laquelle une teneur en composant solide dur est de 0,5 % en volume ou plus mais de 40,0 % en volume ou moins par rapport à un volume d'une quantité totale de la composition durcissable par rayonnement à énergie active à jet d'encre.

5. Composition durcissable par rayonnement à énergie active à jet d'encre selon la revendication 4,
dans laquelle la teneur en composant solide dur est de 1,0 % en volume ou plus mais de 20,0 % en volume ou moins par rapport à un volume d'une quantité totale de la composition durcissable par rayonnement à énergie active à jet d'encre.

6. Composition durcissable par rayonnement à énergie active à jet d'encre selon l'une quelconque des revendications 1 à 5,
dans laquelle un diamètre moyen de particules en volume du composant solide dur est de 5 nm ou plus mais de 1 000 nm ou moins, lorsqu'il est mesuré avec un analyseur de taille de particules.

7. Composition durcissable par rayonnement à énergie active à jet d'encre selon la revendication 6,
dans laquelle le diamètre moyen de particules en volume du composant solide dur est de 120 nm ou plus mais de 250 nm ou moins, lorsqu'il est mesuré avec un analyseur de taille de particules.

8. Composition durcissable par rayonnement à énergie active à jet d'encre selon l'une quelconque des revendications 1 à 7,
dans laquelle un rapport d'abondance d'un composant solide présentant un diamètre de particules qui est de 0,7 fois ou moins ou de 1,4 fois ou plus un diamètre moyen de particules en volume du composant solide dur est de 10 % ou plus.

9. Composition durcissable par rayonnement à énergie active à jet d'encre selon la revendication 8,
dans laquelle le rapport d'abondance d'un composant solide présentant un diamètre de particules qui est de 0,7 fois ou moins ou de 1,4 fois ou plus un diamètre moyen de particules en volume du composant solide dur est de 20 % ou plus.

10. Composition durcissable par rayonnement à énergie active à jet d'encre selon l'une quelconque des revendications 1 à 9,
dans laquelle le monomère polymérisable radical comprend un monomère à base d'acrylique.

11. Composition durcissable par rayonnement à énergie active à jet d'encre selon l'une quelconque des revendications 1 à 10,
dans laquelle une teneur en monomère polymérisable radical est de 50,0 % en masse ou plus mais de 95,0 % en masse ou moins par rapport à une quantité totale de la composition durcissable par rayonnement à énergie active à jet d'encre.

12. Composition durcissable par rayonnement à énergie active à jet d'encre selon l'une quelconque des revendications 1 à 11, comprenant en outre
un initiateur de polymérisation,
dans laquelle une teneur en initiateur de polymérisation est de 0,1 % en masse ou plus mais de 10,0 % en masse ou moins par rapport à une quantité totale de la composition durcissable par rayonnement à énergie active à jet d'encre.

13. Procédé de production d'un objet en trois dimensions comprenant :
la décharge de la composition durcissable par rayonnement à énergie active à jet d'encre selon l'une quelconque des revendications 1 à 12 par un procédé à jet d'encre ; et
le durcissement de la composition durcissable par rayonnement à énergie active à jet d'encre déchargée, par rayonnement avec des rayons à énergie active,
dans lequel le procédé de production d'un objet en trois dimensions comprend la répétition séquentielle de la décharge et du durcissement.

14. Appareil de production d'un objet en trois dimensions, comprenant :
une unité de décharge configurée pour décharger la composition durcissable par rayonnement à énergie active à jet d'encre selon l'une quelconque des revendications 1 à 12 par un procédé à jet d'encre ; et
une unité de durcissement permettant de durcir la composition durcissable par rayonnement à énergie active à jet d'encre déchargée, par rayonnement avec des rayons à énergie active.
